(19) **Europäisches Patentamt European Patent Office Office européen des brevets**

(11) **EP 4 446 189 B1**

(12) **EUROPEAN PATENT SPECIFICATION**

(45) Date of publication and mention
of the grant of the patent:
**01.04.2026 Bulletin 2026/14**

(21) Application number: **23817642.4**

(22) Date of filing: **12.04.2023**

(51) International Patent Classification (IPC):
*B60W 30/18* (2012.01)        *B60W 30/095* (2012.01)
*B60W 60/00* (2020.01)        *B60W 40/02* (2006.01)
*B60W 40/04* (2006.01)

(52) Cooperative Patent Classification (CPC):
**G08G 1/0125; B60W 30/095; B60W 30/18;
B60W 30/18163; B60W 40/02; B60W 40/04;
B60W 60/00; B60W 60/0011; G08G 1/0145;
G08G 1/096725; G08G 1/166; G08G 1/167;
B60W 2520/10; B60W 2554/4042; B60W 2555/60**

(86) International application number:
**PCT/CN2023/087844**

(87) International publication number:
**WO 2024/178799 (06.09.2024 Gazette 2024/36)**

(54) **DETERMINATION METHOD AND DETERMINATION DEVICE FOR VEHICLE TRAFFIC EFFICIENCY, AND VEHICLE**

BESTIMMUNGSVERFAHREN UND BESTIMMUNGSVORRICHTUNG FÜR FAHRZEUGVERKEHRSEFFIZIENZ UND FAHRZEUG

PROCÉDÉ DE DÉTERMINATION ET DISPOSITIF DE DÉTERMINATION POUR EFFICACITÉ DE TRAFIC DE VÉHICULE, ET VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.02.2023 CN 202310171819**

(43) Date of publication of application:
**16.10.2024 Bulletin 2024/42**

(73) Proprietor: **Momenta (Suzhou) Technology Co., Ltd.**
**Suzhou, Jiangsu 215100 (CN)**

(72) Inventor: **WEI, Shujun**
**Suzhou, Jiangsu 215100 (CN)**

(74) Representative: **Canzler & Bergmeier**
**Patentanwälte**
**Partnerschaft mbB**
**Despag-Straße 6**
**85055 Ingolstadt (DE)**

(56) References cited:
CN-A- 112 389 427        CN-A- 112 455 445
CN-A- 113 771 881        CN-A- 113 844 451
CN-A- 113 844 451        CN-A- 114 506 342
CN-A- 115 257 811        CN-A- 115 402 318
CN-A- 115 571 130        KR-A- 20200 132 652
US-A1- 2020 310 428

## Description

### TECHNICAL FIELD

The present disclosure relates to the technical field of intelligent driving, and in particular, to a determination method and a determination device for vehicle traffic efficiency, and a vehicle.

### BACKGROUND

With the rapid development of intelligent driving technology, the control over a vehicle traveling process is becoming more and more refined. A vehicle generally has a lane change during the traveling to meet different traveling planning requirements.

At present, an existing vehicle lane change intention is generally determined based on machine learning algorithm for intelligent prediction. After the vehicle lane change intention is determined, vehicle lane changing planning is performed. For example, sensing information, map information, vehicle state information, and the like are taken as input parameters of the machine learning algorithm to obtain output parameters such as a lane change direction. However, the vehicle lane change intention determined based on the machine learning algorithm requires a large amount of historical data for training and learning, thereby leading to instability of the lane change intention, thus greatly increasing a safety risk of vehicle traveling, as a result, stability and safety requirements of the determination of the vehicle lane change intention cannot be met. Therefore, there is a need for a determination method for vehicle traffic efficiency to solve the above problems to perform vehicle lane change planning. Provided prior documents US 2020310428 A1, CN 113844451 A, and CN 114506342 A are considered as relevant.

### SUMMARY

In view of this, the present disclosure provides a determination method and a determination device for vehicle traffic efficiency, as defined by the independent claims, and a non-claimed vehicle, with a main purpose of solving the problem of poor stability of the determination of the existing vehicle lane change intention. The invention is set out in the appended set of claims.

According to an aspect of the present disclosure, a determination method for vehicle traffic efficiency is provided and includes:

determining obstacle vehicles in lanes corresponding to a traveling vehicle, the obstacle vehicles including a same-lane leading vehicle and a different-lane leading vehicle of the traveling vehicle;

determining a vehicle block cost parameter based on a first velocity of the traveling vehicle and a second velocity of the same-lane leading vehicle, and obtaining an obstacle block cost parameter of the different-lane leading vehicle; and determining lane traffic efficiency based on the vehicle block cost parameter, the obstacle block cost parameter, and a block weight coefficient, so as to select, based on the lane traffic efficiency, a lane for vehicle lane changing, the lane traffic efficiency representing an expected smooth traffic condition when the traveling vehicle enters a lane.

According to the aspect, obstacle vehicles in lanes corresponding to a traveling vehicle are determined, the obstacle vehicles include a same-lane leading vehicle and a different-lane leading vehicle of the traveling vehicle; a vehicle block cost parameter is determined based on a first velocity of the traveling vehicle and a second velocity of the same-lane leading vehicle, and an obstacle block cost parameter of the different-lane leading vehicle is obtained; and lane traffic efficiency is determined based on the vehicle block cost parameter, the obstacle block cost parameter, and a block weight coefficient. In embodiments, this is performed to select, based on the lane traffic efficiency, a lane for vehicle lane changing, and the lane traffic efficiency represents an expected smooth traffic condition when the traveling vehicle enters a lane. In this way, the lane traffic efficiency is directly solved by linear calculation, to serve as a judgment basis for a lane change, which greatly improves accuracy of recognition of a lane change intention and meets stability and safety requirements of determination of the vehicle lane change intention, thereby improving accuracy of lane change planning.

Further, the obstacle block cost parameter includes a blocked cost parameter and a self-block cost parameter, and the obtaining an obstacle block cost parameter of the different-lane leading vehicle includes:

determining the blocked cost parameter based on a difference between a third velocity of the different-lane leading vehicle and a fourth velocity of an associated leading vehicle; and determining the self-block cost parameter based on the third velocity, the fourth velocity, and a lane reference velocity, the lane reference velocity being determined based on a preset traveling velocity and a minimum lane velocity.

Further, the determining lane traffic efficiency based on the vehicle block cost parameter, the obstacle block cost parameter, and a block weight coefficient includes:

determining vehicle block efficiency based on a product of the vehicle block cost parameter and a first block weight coefficient;

calculating a first product of the blocked cost parameter and the first block weight coefficient and a first product of the self-block cost parameter and a second block weight coefficient respectively, and obtaining obstacle block efficiency based on a sum of the first products; and

determining lane traffic efficiency based on a sum of the vehicle block efficiency and the obstacle block efficiency.

Further, the determining lane traffic efficiency based on a sum of the vehicle block efficiency and the obstacle block efficiency includes:

obtaining a first collision weight between the traveling vehicle and the same-lane leading vehicle and a second collision weight between the traveling vehicle and the different-lane leading vehicle; and

calculating a second product of the vehicle block efficiency and the first collision weight and a second product of the obstacle block efficiency and the second collision weight respectively, and determining lane traffic efficiency based on a sum of the second products.

Further, the determining obstacle vehicles in lanes corresponding to a traveling vehicle includes:

searching for all leading obstacle vehicles corresponding to a traveling position of the traveling vehicle; and

determining a same-lane leading vehicle and a different-lane leading vehicle based on lane positions of the leading obstacle vehicles.

Further, subsequent to the determining lane traffic efficiency based on the vehicle block cost parameter, the obstacle block cost parameter, and a block weight coefficient, the method further includes:

obtaining traveling state information of the traveling vehicle under a condition that vehicle collision time in a target lane selected based on the lane traffic efficiency matches reference collision time; and

triggering a vehicle lane changing planning operation under a condition that the traveling state information does not match a lane change suppression strategy of the target lane.

Further, the method further includes:

starting a cooling timer for a lane change under a condition that the vehicle collision time in the target lane does not match the reference collision time or under a condition that the traveling state information matches the lane change suppression strategy of the target lane; and

re-performing steps of determining obstacle vehicles in lanes corresponding to a traveling vehicle under a condition that the cooling timer reaches a preset cooling time interval.

According to another aspect of the present disclosure, a computer readable storage medium is provided, storing a program or an instruction, when the program or instruction is executed by the processor, steps in the determination method for vehicle traffic efficiency as described above are implemented.

According to yet another aspect of the present disclosure, a computer device is provided, including at least one processor, the processor is coupled to a memory, a program or an instruction run on the processor is stored in the memory, and when the program or instruction is executed by the processor, steps in the determination method for vehicle traffic efficiency as described above are implemented.

To better illustrate the present disclosure, implementation can be performed according to content of the specification. Moreover, to make the foregoing and other objectives, features, and advantages of the present disclosure more comprehensible, specific embodiments of the present disclosure are particularly listed below.

**BRIEF DESCRIPTION OF DRAWINGS**

Through reading of detailed description of preferred embodiments below, other advantages and beneficial effects will become apparent for those skilled in the art. The accompanying drawings are merely for illustrating an objective of the preferred embodiments, rather than for limiting the present disclosure. Moreover, in the whole drawings, same reference numerals represent identical parts. In the drawings,

FIG. 1 is a flowchart of a determination method for vehicle traffic efficiency according to some embodiments of the present disclosure;

FIG. 2 is a flowchart of another determination method for vehicle traffic efficiency according to some embodiments of the present disclosure;

FIG. 3 is a schematic diagram of sensing a different-lane or same-lane obstacle vehicle of a traveling vehicle according to some embodiments of the present disclosure;

FIG. 4 is a flowchart of another determination method for vehicle traffic efficiency according to some embodiments of the present disclosure;

FIG. 5 is a block diagram of components of a determination device for vehicle traffic efficiency according to some embodiments of the present disclosure; and

FIG. 6 is a schematic structural diagram of a terminal according to some embodiments of the present disclosure.

## DESCRIPTION OF EMBODIMENTS

Exemplary embodiments of the present disclosure will be described in more details below with reference to the accompanying drawings. Although the exemplary embodiments of the present disclosure are shown in the accompanying drawings, it is to be understood that the present disclosure may be implemented in various forms and shall not be limited to the embodiments described herein. Rather, these embodiments are provided for better illustration of the present disclosure and to better illustrate a scope of the present disclosure to those skilled in the art.

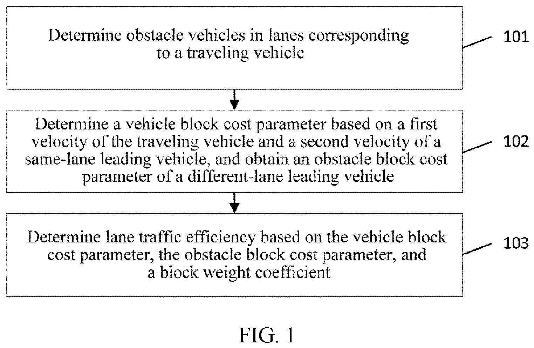

Some embodiments of the present disclosure provide a determination method for vehicle traffic efficiency. As shown in FIG. 1, the method includes the following steps.

In 101, obstacle vehicles in various lanes corresponding to a traveling vehicle are determined.

In some embodiments of the present disclosure, during trajectory planning of a driverless intelligent vehicle, an automatic driving processor as a current execution body may be a processor configured on a vehicle, a cloud server that matches the vehicle, or the like. In this case, the current execution body determines obstacle vehicles in various lanes corresponding to a traveling vehicle to calculate vehicle traffic efficiency, thereby determining whether the traveling vehicle may make a lane change into a corresponding lane. The obstacle vehicles include a same-lane leading vehicle and a different-lane leading vehicle of the traveling vehicle. Herein, the same-lane leading vehicle is a front vehicle in a same lane as the traveling vehicle, and the different-lane leading vehicle is a front vehicle in different lanes from the traveling vehicle, which may be one or more. In this case, different lanes are preferably determined as a left lane and a right lane of the same lane, which are not limited in the present disclosure.

It is to be noted that the vehicle refers to a vehicle with an automatic control system in an automatic driving scenario, including a passenger vehicle and a commercial vehicle. The passenger vehicle may be, but is not limited to, a sedan, a sport utility vehicle, a multi-person commercial vehicle, and the like. The commercial vehicle may be, but is not limited to, a pickup truck, a minibus, a self-unloading truck, a truck, a tractor, a trailer, a mining vehicle, and the like. In this case, the vehicle can realize automatic driving based on the automatic control system.

In 102, a vehicle block cost parameter is determined based on a first velocity of the traveling vehicle and a second velocity of the same-lane leading vehicle, and an obstacle block cost parameter of the different-lane leading vehicle is obtained.

In some embodiments of the present disclosure, since a traveling state of the traveling vehicle in the same lane is limited to a velocity of the same-lane leading vehicle, the current execution body determines the vehicle block cost parameter based on the first velocity of the traveling vehicle and the second velocity of the same-lane leading vehicle. The current execution body may separately scan the traveling vehicle and the same-lane leading vehicle respectively based on a sensing system to determine the first velocity and the second velocity, so that the current execution body can calculate the vehicle block cost parameter. For example, the vehicle block cost parameter is egoBlockedCost=max(v_ego-v_lead, 0), where v_ego denotes the first velocity, and v_lead denotes the second velocity. That is, a maximum value in a difference between the first velocity and the second velocity and 0 is determined as the vehicle block cost parameter.

It is to be noted that, when the traveling vehicle has a lane change, the traveling state after the lane change is limited by a velocity of a leading vehicle in a to-be-changed lane, so the current execution body obtains the obstacle block cost parameter of the different-lane leading vehicle. In this case, the obstacle block cost parameter includes a blocked cost parameter and a self-block cost parameter. The blocked cost parameter represents a situation where the traveling vehicle has a lane change and is then affected by the velocity of the front vehicle in the lane after the lane change. The self-block cost parameter represents a situation where the traveling vehicle has a lane change and is then affected by a velocity limit of the lane after the lane change and a set velocity for automatic driving, to determine lane traffic efficiency in the to-be-changed lane.

In 103, lane traffic efficiency is determined based on the vehicle block cost parameter, the obstacle block cost parameter, and a block weight coefficient.

In some embodiments of the present disclosure, the lane traffic efficiency represents an expected smooth traffic condition when the traveling vehicle enters a lane, so that the current execution body selects, based on the lane traffic efficiency of each lane, a lane for vehicle lane changing. For example, the block weight coefficient represents block effects caused by expected collisions with other vehicles when the traveling vehicle is traveling at the set velocity for automatic driving and at the velocity limitation in the lane, which may be configured or may be calculated based on collision time or velocities between the traveling vehicle and other vehicle. The block weight coefficient includes a first block weight coefficient and a second block weight coefficient, which is not limited in the present disclosure. After the lane traffic efficiency is determined, whether the traveling vehicle has a lane change may be judged based on the lane traffic efficiency.

In some other embodiments of the present disclosure, for further description and limitation, the obstacle block cost parameter includes a blocked cost parameter and a self-block cost parameter, and the step of obtaining an obstacle block cost parameter of the different-lane leading vehicle includes: determining the blocked cost parameter based on a difference between a third velocity of the different-lane leading vehicle and a fourth velocity of an associated leading vehicle; and determining the self-block cost parameter based on the third velocity, the fourth velocity, and a lane reference velocity.

In order to accurately obtain the obstacle block cost parameter of the different-lane leading vehicle to improve effectiveness of calculation of the lane traffic efficiency to ensure a safe and effective lane change of the vehicle, for example, the current execution body determines the blocked cost parameter based on the difference between the third velocity of the different-lane leading vehicle and the fourth velocity of the associated leading vehicle. The third velocity of the different-lane leading vehicle and the fourth velocity of the associated leading vehicle may be determined by scanning the different-lane leading vehicle and the associated leading vehicle by the sensing system. The associated leading vehicle is a vehicle in front of the different-lane leading vehicle. The blocked cost parameter is objectBlockedCost=-max(v_object-v_object front, 0), where v_object denotes the third velocity, and v_object_front denotes the fourth velocity. That is, after the difference between the third velocity and the fourth velocity is determined, a maximum value in the difference and 0 is taken as the blocked cost parameter. In addition, the lane reference velocity is determined based on a preset traveling velocity and a minimum lane velocity. The preset traveling velocity is an automatic driving velocity preset for the traveling vehicle. The minimum lane velocity is a minimum lane velocity limitation. Then, the self-block cost parameter is determined as objectSelfCost=max(min(v_object_front, v_prefered)-v_object, 0), where v_prefered=min(user_set_velocity, lane_velocity_limit), user_set_velocity denotes the preset traveling velocity, and lane_velocity_limit denotes the minimum lane velocity, so as to determine the self-block cost parameter in conjunction with the third velocity and the fourth velocity on the basis of taking a smaller value in the minimum lane velocity and the preset traveling velocity as the lane reference velocity.

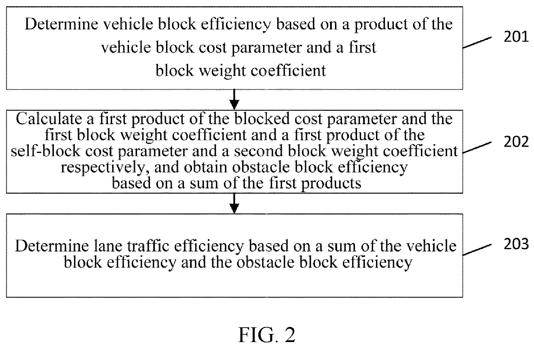

In some other embodiments of the present disclosure, for further description and limitation, as shown in FIG. 2, the step of determining lane traffic efficiency based on the vehicle block cost parameter, the obstacle block cost parameter, and a block weight coefficient includes: 201, determining vehicle block efficiency based on a product of the vehicle block cost parameter and a first block weight coefficient; 202, calculating a first product of the blocked cost parameter and the first block weight coefficient and a first product of the self-block cost parameter and a second block weight coefficient respectively, and obtaining obstacle block efficiency based on a sum of the first products; and 203, determining lane traffic efficiency based on a sum of the vehicle block efficiency and the obstacle block efficiency.

In order to improve effectiveness of the determination of the lane traffic efficiency and meet a requirement for lane change planning based on the vehicle traffic efficiency, in some embodiments of the present disclosure, when the lane traffic efficiency is determined based on the vehicle block cost parameter, the obstacle block cost parameter, and the block weight coefficient, since the block weight coefficient includes a first block weight coefficient and a second block weight coefficient, the vehicle block efficiency is obtained through a product of the vehicle block cost parameter and the first block weight coefficient, denoted as $a_1 * egoBlockedCost$, a product of the blocked cost parameter and the first block weight coefficient is denoted as $a_1 * objectBlockedCost_i$, a product of the self-block cost parameter and the second block weight coefficient is denoted as $a_2 * objectSelfCost_i$, and the obstacle block efficiency is obtained through a sum of the products, denoted as $\sum_{1=<i<=N}(a_1 * objectBlockedCost_i + a_2 * objectSelfCost_i)$. Then, in some embodiments of the present disclosure, the determining the lane traffic efficiency based on a sum of the vehicle block efficiency and the obstacle block efficiency is expressed as:

$$LaneEfficiencyCost = a_1 * egoBlockedCost +$$
$$\sum_{1=<i<=N}(a_1 * objectBlockedCost_i + a_2 * objectSelfCost_i)$$
,

where *LaneEfficiencyCost* denotes the vehicle traffic efficiency, *egoBlockedCost* denotes the vehicle block cost parameter, *objectBlockedCost_i* denotes the blocked cost parameter, *objectSelfCost_i* denotes the self-block cost parameter, $a_1$

denotes the first block weight coefficient, $a_2$ denotes the second block weight coefficient, $i$ denotes an $i^{th}$ vehicle, and $N$ denotes a total number of obstacle vehicles determined.

In some other embodiments of the present disclosure, for further description and limitation, the step of determining the lane traffic efficiency based on a sum of the vehicle block efficiency and the obstacle block efficiency includes: obtaining a first collision weight between the traveling vehicle and the same-lane leading vehicle and a second collision weight between the traveling vehicle and the different-lane leading vehicle; and calculating a second product of the vehicle block efficiency and the first collision weight and a second product of the obstacle block efficiency and the second collision weight respectively, and determining the lane traffic efficiency based on a sum of the second products.

In order to ensure no collision between the traveling vehicle and the obstacle vehicles during lane change planning based on the lane traffic efficiency, the lane traffic efficiency may be determined in conjunction with a collision weight, so as to improve the effectiveness of the determination of the lane traffic efficiency. For example, the current execution body obtains a first collision weight $\omega_l$ between the traveling vehicle and the same-lane leading vehicle and a second collision weight $\omega_i$ between the traveling vehicle and the different-lane leading vehicle. When v_object≥v_prefered, the first collision weight $\omega_l$ is configured as 0, and when v_object<v_prefered, determination may be made based on vehicle collision time ttc=distance/(object_v-v_prefered). That is, the larger the ttc, the smaller the value of the second collision weight $\omega_i$. Herein, "distance" denotes a preset following distance and is configured based on a lane change requirement, the first collision weight $\omega_l$ is configured based on v_lead of the same-lane leading vehicle. For example, higher the velocity, the smaller the value of the first collision weight $\omega_l$. Specific limitations are not made in the present disclosure. For example, in some embodiments of the present disclosure, the lane traffic efficiency may be calculated by:

$$LaneEfficiencyCost = a_1 * egoBlockedCost * \omega_l + \sum_{1=<i<=N} (a_1 * objectBlockedCost_i + a_2 * objectSelfCost_i) * \omega_i$$
.

In some other embodiments of the present disclosure, for further description and limitation, the step of determining obstacle vehicles in various lanes corresponding to a traveling vehicle includes: searching for all leading obstacle vehicles corresponding to a traveling position of the traveling vehicle; and determining a same-lane leading vehicle and a different-lane leading vehicle based on lane positions of the leading obstacle vehicles.

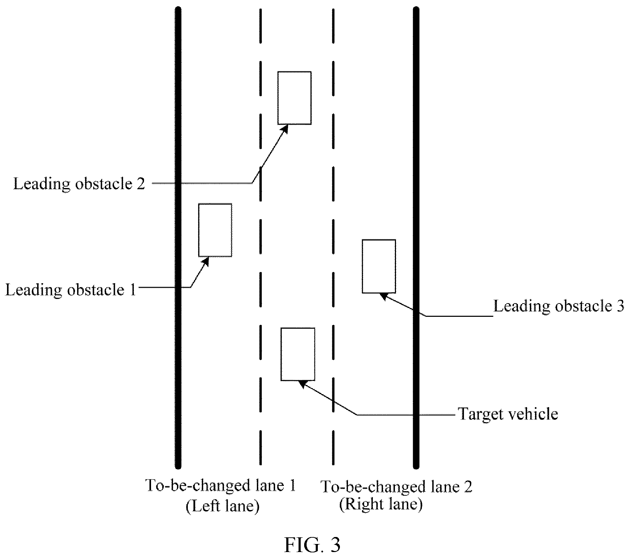

In order to accurately determine the obstacle vehicles that affect the lane change of the traveling vehicle to effectively improve the lane traffic efficiency of the traveling vehicle for a lane change, the current execution body first determines a traveling position of the traveling vehicle to find all leading obstacle vehicles corresponding to the traveling position through the sensing system. The traveling position refers to a specific lane position of the traveling vehicle in the lane. For example, when the vehicle is traveling on an expressway having four lanes, it may be determined by the sensing system or a global satellite navigation system based on the traveling position of the traveling vehicle that the traveling vehicle is in a second lane on the left, which is not limited in the present disclosure. Then, all leading obstacle vehicles corresponding to the traveling position are searched for through a sensing system, for example, a leading obstacle vehicle 1, a leading obstacle vehicle 2, and a leading obstacle vehicle 3 corresponding to a traveling vehicle ego as shown in FIG. 3, which are not limited in the present disclosure. In addition, in order to calculate the vehicle block cost parameter and the obstacle block cost parameter respectively, the same-lane leading vehicle and the different-lane leading vehicle are determined respectively based on lane positions of the leading obstacle vehicles. For example, the leading obstacle vehicle 2 is the same-lane leading vehicle, the leading obstacle vehicle 1 and the leading obstacle vehicle 3 are different-lane leading vehicles, further, the leading obstacle vehicle 1 is a left-lane leading vehicle, and the leading obstacle vehicle 3 is a right-lane leading vehicle.

It is to be noted that the sensing system in some embodiments of the present disclosure may be a system having a function of scanning images in units of time frames, so as to determine information such as a velocity and a position of the vehicle based on a vehicle position in each frame of image, and content such as environment information of the vehicle may also be determined based on recognition of each frame of image data, which is not limited in the present disclosure.

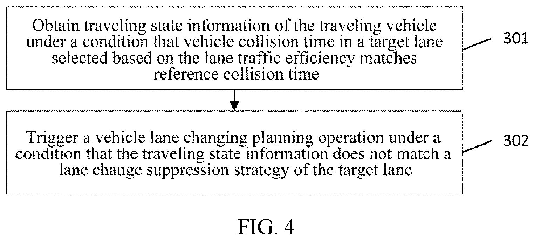

In some other embodiments of the present disclosure, for further description and limitation, as shown in FIG. 4, subsequent to the step of determining lane traffic efficiency based on the vehicle block cost parameter, the obstacle block cost parameter, and a block weight coefficient, the method further includes: 301, obtaining traveling state information of the traveling vehicle under a condition that vehicle collision time in a target lane selected based on the lane traffic efficiency matches reference collision time; and 302, triggering a vehicle lane changing planning operation under a condition that the traveling state information does not match a lane change suppression strategy of the target lane.

In order to select the target lane based on the lane traffic efficiency to enable the traveling vehicle to change a road safely and effectively, after the lane traffic efficiency is determined, the target lane is selected based on the lane traffic efficiency. Preferably, a lane corresponding to a maximum value in a plurality of lane traffic efficiencies is selected as the target lane, or a plurality of traveling vehicles meeting a preset lane change condition may be selected, which is not limited in the present disclosure. In addition, after the current execution body selects the target lane, in order to prevent a collision of the traveling vehicle after entering a to-be-changed target lane with an obstacle vehicle, matching is performed in advance based on vehicle collision time in the target lane and reference collision time, to serve as a basis for judging entry into the target lane. The reference collision time is determined based on a steady-state following factor and a preset following distance. The steady-state following factor represents a requirement for the traveling vehicle to stably follow the front vehicle. When the current execution body is configured in advance based on an automatic driving following requirement of the traveling vehicle, for example, the steady-state following factor=0.9, the preset following distance represents a minimum distance for the traveling vehicle to stably follow the front vehicle. The current execution body is configured in advance based on the automatic driving following requirement of the traveling vehicle, which is not limited in the present disclosure. Then, in order to ensure that the traveling vehicle does not collide with other obstacle vehicles in the target lane after the lane change, the reference collision time is directly determined based on the steady-state following factor and the preset following distance, and may be, for example, manually configured directly or calculated through a linear relationship, which is not limited in the present disclosure. The vehicle collision time is time when the traveling vehicle is expected to collide with other obstacles after changing the lane to the target lane, and may be calculated based on the velocity of the traveling vehicle and a sensed distance of the obstacle vehicle, which is not limited in the present disclosure. In this case, the current execution body obtains traveling state information of the traveling vehicle. The traveling state information includes, but is not limited to, a traveling velocity, traveling scene information, a lane change function state, a lane change duration, an automatic traveling state, and the like, so as to perform matching based on the traveling state information and the lane change suppression strategy. The traveling state information may be obtained by scanning based on the sensing system, or obtained based on data recorded in the current execution body, or obtained based on a vehicle navigation system, which is not limited in the present disclosure.

It is to be noted that the lane change suppression strategy of the traveling vehicle is pre-configured in the current execution body, so as to judge based on the traveling state information of the traveling vehicle whether a lane change condition is met, so that the traveling vehicle performs vehicle lane changing planning when meeting the lane change condition. The lane change suppression strategy includes at least one sub-rule that blocks a lane change of the traveling vehicle. For example, if the traveling scene information in the traveling state information is that the traveling vehicle is in a non-ramp and the sub-rule is that lane changes are prohibited on ramps, indicating that the traveling vehicle does not match the lane change suppression strategy of the target lane, then the current execution body generates a lane change instruction of the target lane, which is not limited in the present disclosure. Different lane change suppression sub-strategies may be pre-configured in the current execution body, so as to meet real-time changing lane change requirements. For example, the lane change suppression strategy may include, but is not limited to, any one of or a combination of a plurality of sub-rules of prohibiting lane changes if an overtaking lane change automatic driving function is not enabled, prohibiting lane changes on non-highway roads, prohibiting lane changes in solid lanes, prohibiting lane changes when there are dangerous vehicles behind, prohibiting lane changes when a lane change cooling duration is less than a preset duration, prohibiting lane changes in non-automatic driving states, prohibiting lane changes on ramps within a preset distance ahead, prohibiting lane changes when a target vehicle velocity is lower than a preset vehicle velocity, prohibiting lane changes when a curvature velocity limit of the traveling vehicle is less than a preset velocity, and prohibiting lane changes when there is a fixed obstacle in front of the target lane, which is not limited in the present disclosure. In addition, after triggering the vehicle lane changing planning operation, the current execution body plans, based on path planning of automatic driving, a traveling route for the traveling vehicle to change a lane and enter the target lane, so that the vehicle automatically travels based on a planned path and enters the target lane, which is not limited in the present disclosure.

In some other embodiments of the present disclosure, for further description and limitation, the step further includes: starting a cooling timer for a lane change under a condition that the vehicle collision time in the target lane does not match the reference collision time or under a condition that the traveling state information matches the lane change suppression strategy of the target lane; and re-performing steps of determining obstacle vehicles in lanes corresponding to a traveling vehicle under a condition that the cooling timer reaches a preset cooling time interval.

In order to meet safety and effectiveness requirements for vehicle lane changes, in a specific scene in some embodiments of the present disclosure, when the vehicle collision time in the target lane does not match the reference collision time or the traveling state information matches the lane change suppression strategy, it indicates that the target vehicle is not suitable for a lane change, so the current execution body starts a cooling timer so as to re-perform steps of determining obstacle vehicles in lanes corresponding to a traveling vehicle and subsequent steps after the cooling timer reaches a preset cooling time interval, to determine next vehicle traffic efficiency. In another specific scene in some embodiments of the present disclosure, the current execution body may update the to-be-changed lane of the target vehicle, and may determine next vehicle traffic efficiency when the preset cooling time interval is reached, which indicates that the timer reaches the preset cooling time interval after the target vehicle changes the lane to the target lane. Then, the current execution body performs a step of determining obstacle vehicles in lanes corresponding to a traveling vehicle and subsequent steps, to determine next vehicle traffic efficiency. The preset cooling time interval may be 2s, 5s, or the like, and may be configured based on a lane change requirement, which is not limited in the present disclosure.

Some embodiments of the present disclosure provide a non-claimed determination method for vehicle traffic efficiency. Compared with the related art, in some embodiments of the present disclosure, obstacle vehicles in lanes corresponding to a traveling vehicle are determined, the obstacle vehicles include a same-lane leading vehicle and a different-lane leading vehicle of the traveling vehicle; a vehicle block cost parameter is determined based on a first velocity of the traveling vehicle and a second velocity of the same-lane leading vehicle, and an obstacle block cost parameter of the different-lane leading vehicle is obtained; and lane traffic efficiency is determined based on the vehicle block cost parameter, the obstacle block cost parameter, and a block weight coefficient, so as to select, based on the lane traffic efficiency, a lane for vehicle lane changing, and the lane traffic efficiency represents an expected smooth traffic condition when the traveling vehicle enters a lane. In this way, the lane traffic efficiency is directly solved by linear calculation, to serve as a judgment basis for a lane change, which greatly improves accuracy of recognition of a lane change intention and meets stability and safety requirements of determination of the vehicle lane change intention, thereby improving accuracy of lane change planning.

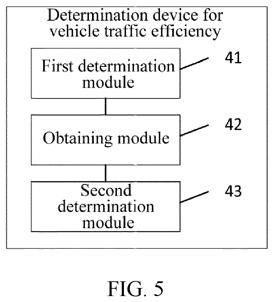

Further, as an implementation for the above method shown in FIG. 1, some embodiments of the present disclosure provide a determination device for vehicle traffic efficiency. As shown in FIG. 5, the device includes a first determination module 41, an obtaining module 42, and a second determination module 43.

The first determination module 41 is configured to determine obstacle vehicles in lanes corresponding to a traveling vehicle, and the obstacle vehicles include a same-lane leading vehicle and a different-lane leading vehicle of the traveling vehicle.

The obtaining module 42 is configured to determine a vehicle block cost parameter based on a first velocity of the traveling vehicle and a second velocity of the same-lane leading vehicle, and obtain an obstacle block cost parameter of the different-lane leading vehicle.

The second determination module 43 is configured to determine lane traffic efficiency based on the vehicle block cost parameter, the obstacle block cost parameter, and a block weight coefficient, so as to select, based on the lane traffic efficiency, a lane for vehicle lane changing, and the lane traffic efficiency represents an expected smooth traffic condition when the traveling vehicle enters a lane.

Further, the obstacle block cost parameter includes a blocked cost parameter and a self-block cost parameter, and the obtaining module includes a first determination unit and a second determination unit.

The first determination unit is configured to determine the blocked cost parameter based on a difference between a third velocity of the different-lane leading vehicle and a fourth velocity of an associated leading vehicle.

The second determination unit is configured to determine the self-block cost parameter based on the third velocity, the fourth velocity, and a lane reference velocity, and the lane reference velocity is determined based on a preset traveling velocity and a minimum lane velocity.

Further, the second determination module includes a third determination unit, a calculation unit and a fourth determination unit.

The third determination unit is configured to determine vehicle block efficiency based on a product of the vehicle block cost parameter and a first block weight coefficient;

The calculation unit is configured to calculate a first product of the blocked cost parameter and the first block weight coefficient and a first product of the self-block cost parameter and a second block weight coefficient respectively; and obtain obstacle block efficiency based on a sum of the first products.

The fourth determination unit is configured to determine lane traffic efficiency based on a sum of the vehicle block efficiency and the obstacle block efficiency.

Further, the fourth determination unit is configured to obtain a first collision weight between the traveling vehicle and the same-lane leading vehicle and a second collision weight between the traveling vehicle and the different-lane leading vehicle; and calculate a second product of the vehicle block efficiency and the first collision weight and a second product of the obstacle block efficiency and the second collision weight respectively; and determine lane traffic efficiency based on a sum of the second products.

Further, the first determination module includes a search unit and a fifth determination unit.

The search unit is configured to search for all leading obstacle vehicles corresponding to a traveling position of the traveling vehicle.

The fifth determination unit is configured to determine a same-lane leading vehicle and a different-lane leading vehicle based on lane positions of the leading obstacle vehicles.

Further, the device further includes a trigger module.

The obtaining module is configured to obtain traveling state information of the traveling vehicle under a condition that vehicle collision time in a target lane selected based on the lane traffic efficiency matches reference collision time.

The trigger module is configured to trigger a vehicle lane changing planning operation under a condition that the traveling state information does not match a lane change suppression strategy of the target lane.

Further, the device further includes a starting module and an execution module.

The starting module is configured to start a cooling timer for a lane change under a condition that the vehicle collision time in the target lane does not match the reference collision time or under a condition that the traveling state information matches the lane change suppression strategy of the target lane.

The execution module is configured to re-perform steps of determining obstacle vehicles in lanes corresponding to a traveling vehicle under a condition that the cooling timer reaches a preset cooling time interval.

Some embodiments of the present disclosure provide a non-claimed determination device for vehicle traffic efficiency. Compared with the related art, in some embodiments of the present disclosure, obstacle vehicles in lanes corresponding to a traveling vehicle are determined, and the obstacle vehicles include a same-lane leading vehicle and a different-lane leading vehicle of the traveling vehicle; a vehicle block cost parameter is determined based on a first velocity of the traveling vehicle and a second velocity of the same-lane leading vehicle, and an obstacle block cost parameter of the different-lane leading vehicle is obtained; and lane traffic efficiency is determined based on the vehicle block cost parameter, the obstacle block cost parameter, and a block weight coefficient, so as to select, based on the lane traffic efficiency, a lane for vehicle lane changing, and the lane traffic efficiency represents an expected smooth traffic condition when the traveling vehicle enters a lane. In this way, the lane traffic efficiency is directly solved by linear calculation, to serve as a judgment basis for a lane change, which greatly improves accuracy of recognition of a lane change intention and meets stability and safety requirements of determination of the vehicle lane change intention, thereby improving accuracy of lane change planning.

According to some embodiments of the present disclosure, a vehicle is provided and includes the above-mentioned determination device for vehicle traffic efficiency.

According to some embodiments of the present disclosure, a readable storage medium is provided. The readable storage medium stores a program or an instruction. When the program or instruction is executed by the processor, steps in the determination method for vehicle traffic efficiency as described above are implemented.

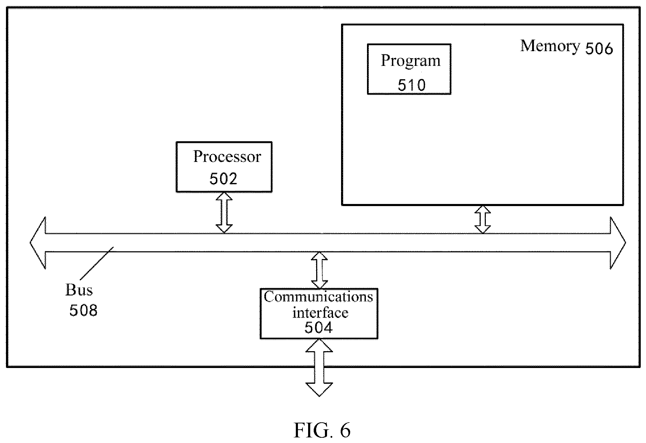

FIG. 6 is a schematic structural diagram of a computer device according to some embodiments of the present disclosure, including at least one processor. The processor is coupled to a memory, a program or an instruction run on the processor is stored in the memory, and when the program or instruction is executed by the processor, steps in the determination method for vehicle traffic efficiency as described above are implemented. Specific embodiments of the present disclosure do not limit specific implementation of the computer device.

As shown in FIG. 6, the computer device may include: a processor 502, a communications interface 504, a memory 506, and a communications bus 508.

The processor 502, the communications interface 504, and the memory 506 communicate with each other by using the communications bus 508.

The communications interface 504 is configured to communicate with network elements of other devices such as clients or other servers.

The processor 502 is configured to perform a program 510, for example, perform related steps in the embodiments of the determination method for vehicle traffic efficiency described above.

For example, the program 510 may include program codes. The program codes include computer operating instructions.

The processor 502 may be a central processing unit (CPU) or an Application Specific Integrated Circuit (ASIC), or one or more integrated circuits configured to implement embodiments of the present disclosure. The one or more processors included in the terminal may be processors of a same type, for example, one or more CPUs; or processors of different types, for example, one or more CPUs and one or more ASICs.

The memory 506 is configured to store the program 510. The memory 506 may include a high-velocity random access memory (RAM), and may also include a non-volatile memory, such as at least one disk memory.

The program 510 may be configured to cause the processor 502 to perform the following operations: determining obstacle vehicles in lanes corresponding to a traveling vehicle, the obstacle vehicles including a same-lane leading vehicle and a different-lane leading vehicle of the traveling vehicle; determining a vehicle block cost parameter based on a first velocity of the traveling vehicle and a second velocity of the same-lane leading vehicle, and obtaining an obstacle block cost parameter of the different-lane leading vehicle; and determining lane traffic efficiency based on the vehicle block cost parameter, the obstacle block cost parameter, and a block weight coefficient, so as to select, based on the lane traffic efficiency, a lane for vehicle lane changing, the lane traffic efficiency representing an expected smooth traffic condition when the traveling vehicle enters a lane.

Those skilled in the art should understand that the above modules or steps of the present disclosure can be implemented by a general computing device, which may be concentrated on a single computing device or distributed across a network composed of multiple computing devices. In some embodiments, the modules or steps may be implemented by program codes executable by the computing devices, so that the modules or steps may be stored in a storage device and executed by the computing devices. Moreover, in some cases, the illustrated or described steps may be executed in sequence different from those described herein, or the modules or steps may be made into various integrated circuit modules or a single integrated circuit module for implementation. In this way, the present disclosure is not limited to any specific combination of hardware(s) and software(s).

**Claims**

1. A determination method for vehicle traffic efficiency, comprising:

    determining obstacle vehicles in lanes corresponding to a traveling vehicle, wherein the obstacle vehicles comprise a same-lane leading vehicle and a different-lane leading vehicle of the traveling vehicle;
    determining a vehicle block cost parameter based on a first velocity of the traveling vehicle and a second velocity of the same-lane leading vehicle, and obtaining an obstacle block cost parameter of the different-lane leading vehicle; and
    determining lane traffic efficiency based on the vehicle block cost parameter, the obstacle block cost parameter, and a block weight coefficient, so as to select, based on the lane traffic efficiency, a lane for vehicle lane changing, wherein the lane traffic efficiency represents an expected smooth traffic condition when the traveling vehicle enters a lane,
    wherein the obstacle block cost parameter comprises a blocked cost parameter and a self-block cost parameter, and the obtaining the obstacle block cost parameter of the different-lane leading vehicle comprises:

    determining the blocked cost parameter based on a difference between a third velocity of the different-lane leading vehicle and a fourth velocity of an associated leading vehicle, the associated leading vehicle being a vehicle in front of the different-lane leading vehicle; and
    determining the self-block cost parameter based on the third velocity, the fourth velocity, and a lane reference velocity, wherein the lane reference velocity is determined based on a preset traveling velocity and a minimum lane velocity, the preset traveling velocity being an automatic driving velocity preset for the traveling vehicle, and the minimum lane velocity is being a minimum lane velocity limitation.

2. The method according to claim 1, wherein the determining lane traffic efficiency based on the vehicle block cost parameter, the obstacle block cost parameter, and the block weight coefficient comprises:

    determining vehicle block efficiency based on a product of the vehicle block cost parameter and a first block weight coefficient;
    calculating a first product of the blocked cost parameter and the first block weight coefficient and a first product of the self-block cost parameter and a second block weight coefficient respectively, and obtaining obstacle block efficiency based on a sum of the first products; and
    determining lane traffic efficiency based on a sum of the vehicle block efficiency and the obstacle block efficiency.

3. The method according to claim 2, wherein the determining lane traffic efficiency based on a sum of the vehicle block efficiency and the obstacle block efficiency comprises:

    obtaining a first collision weight between the traveling vehicle and the same-lane leading vehicle and a second collision weight between the traveling vehicle and the different-lane leading vehicle; and
    calculating a second product of the vehicle block efficiency and the first collision weight and a second product of the obstacle block efficiency and the second collision weight respectively, and determining lane traffic efficiency based on a sum of the second products.

4. The method according to claim 1, wherein the determining obstacle vehicles in lanes corresponding to a traveling vehicle comprises:

    searching for all leading obstacle vehicles corresponding to a traveling position of the traveling vehicle; and
    determining a same-lane leading vehicle and a different-lane leading vehicle based on lane positions of the leading obstacle vehicles.

5. The method according to any one of claims 1 to 4, wherein, subsequent to the determining lane traffic efficiency based on the vehicle block cost parameter, the obstacle block cost parameter, and the block weight coefficient, the method further comprises:

    obtaining traveling state information of the traveling vehicle under a condition that vehicle collision time in a target lane selected based on the lane traffic efficiency matches reference collision time; and
    triggering a vehicle lane changing planning operation under a condition that the traveling state information does not match a lane change suppression strategy of the target lane.

**6.** The method according to claim 5, further comprising:

starting a cooling timer for a lane change under a condition that the vehicle collision time in the target lane does not match the reference collision time or under a condition that the traveling state information matches the lane change suppression strategy of the target lane; and
re-performing steps of determining obstacle vehicles in lanes corresponding to the traveling vehicle under a condition that the cooling timer reaches a preset cooling time interval.

**7.** A computer device, comprising at least one processor, wherein the processor is coupled to a memory, a program or an instruction to be run on the processor is stored in the memory, and when the program or instruction is executed by the processor, the steps of the determination method for vehicle traffic efficiency according to any one of claims 1 to 6 are implemented.

**8.** A computer readable storage medium, storing a program or an instruction, wherein, when the program or instruction is executed by the processor, the steps of the determination method for vehicle traffic efficiency according to any one of claims 1 to 6 are implemented.

**Patentansprüche**

**1.** Verfahren zum Bestimmen der Effizienz des Fahrzeugverkehrs, umfassend:

Bestimmen von Hindernisfahrzeugen in Fahrspuren, die einem fahrenden Fahrzeug entsprechen, wobei die Hindernisfahrzeuge ein Führungsfahrzeug in derselben Fahrspur und ein Führungsfahrzeug in einer unterschiedlichen Fahrspur des fahrenden Fahrzeugs umfassen;
Bestimmen eines Fahrzeugblock-Kostenparameters basierend auf einer ersten Geschwindigkeit des fahrenden Fahrzeugs und einer zweiten Geschwindigkeit des Führungsfahrzeugs in derselben Fahrspur und Erhalten eines Hindernisblock-Kostenparameters des Führungsfahrzeugs in einer unterschiedlichen Fahrspur; und
Bestimmen der Effizienz des Fahrspurverkehrs basierend auf dem Fahrzeugblock-Kostenparameter, dem Hindernisblock-Kostenparameter und einem Blockgewichtungskoeffizienten, um basierend auf der Effizienz des Fahrspurverkehrs eine Fahrspur für den Fahrspurwechsel des Fahrzeugs auszuwählen, wobei die Effizienz des Fahrspurverkehrs einen erwarteten reibungslosen Verkehrszustand darstellt, wenn das fahrende Fahrzeug in eine Fahrspur einfährt,
wobei der Hindernisblock-Kostenparameter einen Block-Kostenparameter und einen Selbstblock-Kostenparameter umfasst und das Erhalten des Hindernisblock-Kostenparameters des Führungsfahrzeugs in einer unterschiedlichen Fahrspur umfasst:
Bestimmen des Block-Kostenparameters basierend auf einer Differenz zwischen einer dritten Geschwindigkeit des Führungsfahrzeugs in einer unterschiedlichen Fahrspur und einer vierten Geschwindigkeit eines zugeordneten Führungsfahrzeugs, wobei das zugeordnete Führungsfahrzeug ein Fahrzeug vor dem Führungsfahrzeug in einer unterschiedlichen Fahrspur ist; und
Bestimmen des Selbstblock-Kostenparameters basierend auf der dritten Geschwindigkeit, der vierten Geschwindigkeit und einer Fahrspurreferenzgeschwindigkeit, wobei die Fahrspurreferenzgeschwindigkeit basierend auf einer voreingestellten Reisegeschwindigkeit und einer minimalen Fahrspurgeschwindigkeit bestimmt wird, wobei die voreingestellte Reisegeschwindigkeit eine automatische Fahrgeschwindigkeit ist, die für das fahrende Fahrzeug voreingestellt ist, und die minimale Fahrspurgeschwindigkeit eine minimale Fahrspurgeschwindigkeitsbegrenzung ist.

**2.** Verfahren nach Anspruch 1, wobei das Bestimmen der Effizienz des Fahrspurverkehrs basierend auf dem Fahrzeugblock-Kostenparameter, dem Hindernisblock-Kostenparameter und dem Blockgewichtungskoeffizienten umfasst:

Bestimmen der Effizienz des Fahrzeugblocks basierend auf einem Produkt des Fahrzeugblock-Kostenparameters und einem ersten Blockgewichtungskoeffizienten;
Berechnen eines ersten Produkts des Block-Kostenparameters und des ersten Blockgewichtungskoeffizienten bzw. eines ersten Produkts des Selbstblock-Kostenparameters und eines zweiten Blockgewichtungskoeffizienten und Erhalten der Effizienz des Hindernisblocks basierend auf einer Summe der ersten Produkte; und
Bestimmen der Effizienz des Fahrspurverkehrs basierend auf einer Summe der Effizienz des Fahrzeugblocks und der Effizienz des Hindernisblocks.

3. Verfahren nach Anspruch 2, wobei das Bestimmen der Effizienz des Fahrspurverkehrs basierend auf einer Summe der Effizienz des Fahrzeugblocks und der Effizienz des Hindernisblocks umfasst:

Erhalten eines ersten Kollisionsgewichts zwischen dem fahrenden Fahrzeug und dem Führungsfahrzeug in derselben Fahrspur und eines zweiten Kollisionsgewichts zwischen dem fahrenden Fahrzeug und dem Führungsfahrzeug in einer unterschiedlichen Fahrspur; und
Berechnen eines zweiten Produkts der Effizienz des Fahrzeugblocks und des ersten Kollisionsgewichts bzw. eines zweiten Produkts der Effizienz des Hindernisblocks und des zweiten Kollisionsgewichts und Bestimmen der Effizienz des Fahrspurverkehrs basierend auf einer Summe der zweiten Produkte.

4. Verfahren nach Anspruch 1, wobei das Bestimmen von Hindernisfahrzeugen in Fahrspuren, die einem fahrenden Fahrzeug entsprechen, umfasst:

Suchen nach allen führenden Hindernisfahrzeugen, die einer Fahrposition des fahrenden Fahrzeugs entsprechen; und
Bestimmen eines Führungsfahrzeugs in derselben Fahrspur und eines Führungsfahrzeugs in einer unterschiedlichen Fahrspur basierend auf Fahrspurpositionen der führenden Hindernisfahrzeuge.

5. Verfahren nach einem der Ansprüche 1 bis 4, wobei das Verfahren nach dem Bestimmen der Effizienz des Fahrspurverkehrs basierend auf dem Fahrzeugblock-Kostenparameter, dem Hindernisblock-Kostenparameter und dem Blockgewichtungskoeffizienten ferner umfasst:

Erhalten von Fahrzustandsinformationen des fahrenden Fahrzeugs unter einer Bedingung, dass die Fahrzeugkollisionszeit in einer Zielfahrspur, die basierend auf der Effizienz des Fahrspurverkehrs ausgewählt wird, mit der Referenzkollisionszeit übereinstimmt; und
Auslösen eines Planungsvorgangs für den Fahrspurwechsel des Fahrzeugs unter einer Bedingung, dass die Fahrzustandsinformationen nicht mit einer Fahrspurwechsel-Unterdrückungsstrategie der Zielfahrspur übereinstimmen.

6. Verfahren nach Anspruch 5, ferner umfassend:

Starten eines Kühlzeitgebers für einen Fahrspurwechsel unter einer Bedingung, dass die Fahrzeugkollisionszeit in der Zielfahrspur nicht mit der Referenzkollisionszeit übereinstimmt, oder unter einer Bedingung, dass die Fahrzustandsinformationen mit der Fahrspurwechsel-Unterdrückungsstrategie der Zielfahrspur übereinstimmen; und
erneutes Durchführen von Schritten des Bestimmens von Hindernisfahrzeugen in Fahrspuren, die dem fahrenden Fahrzeug entsprechen, unter einer Bedingung, dass der Kühlzeitgeber ein voreingestelltes Kühlzeitintervall erreicht.

7. Computervorrichtung, umfassend mindestens einen Prozessor, wobei der Prozessor mit einem Speicher gekoppelt ist, ein Programm oder eine Anweisung, das/die auf dem Prozessor ausgeführt werden soll, in dem Speicher gespeichert ist, und wenn das Programm oder die Anweisung durch den Prozessor ausgeführt wird, die Schritte des Verfahrens zum Bestimmen der Effizienz des Fahrzeugverkehrs nach einem der Ansprüche 1 bis 6 implementiert werden.

8. Computerlesbares Speichermedium, das ein Programm oder eine Anweisung speichert, wobei, wenn das Programm oder die Anweisung durch den Prozessor ausgeführt wird, die Schritte des Verfahrens zum Bestimmen der Effizienz des Fahrzeugverkehrs nach einem der Ansprüche 1 bis 6 implementiert werden.

**Revendications**

1. Procédé de détermination de l'efficacité du trafic d'un véhicule, comprenant les étapes consistant à :

déterminer des véhicules d'obstacle dans des voies correspondant à un véhicule se déplacer, dans lequel les véhicules d'obstacle comprennent un véhicule de tête de même voie et un véhicule de tête de voie différente du véhicule se déplacer ;
déterminer un paramètre de coût de blocage de véhicule sur la base d'une première vitesse du véhicule se déplacer et d'une seconde vitesse du véhicule de tête de même voie, et obtenir un paramètre de coût de blocage d'obstacle du véhicule de tête de voie différente ; et

déterminer l'efficacité du trafic de voie sur la base du paramètre de coût de blocage de véhicule, du paramètre de coût de blocage d'obstacle, et d'un coefficient de pondération de blocage, de manière à sélectionner, sur la base de l'efficacité du trafic de voie, une voie pour le changement de voie du véhicule, dans lequel l'efficacité du trafic de voie représente une condition de trafic lisse attendue lorsque le véhicule se déplacer entre dans une voie, dans lequel le paramètre de coût de blocage d'obstacle comprend un paramètre de coût bloqué et un paramètre de coût d'auto-blocage, et obtenir le paramètre de coût de blocage d'obstacle du véhicule de tête de voie différente comprend les étapes consistant à :

déterminer le paramètre de coût bloqué sur la base d'une différence entre une troisième vitesse du véhicule de tête de voie différente et une quatrième vitesse d'un véhicule de tête associé, le véhicule de tête associé étant un véhicule devant le véhicule de tête de voie différente ; et

déterminer le paramètre de coût d'auto-blocage sur la base de la troisième vitesse, de la quatrième vitesse, et d'une vitesse de référence de voie, dans lequel la vitesse de référence de voie est déterminée sur la base d'une vitesse de déplacement prédéfinie et d'une vitesse de voie minimale, la vitesse de déplacement prédéfinie étant une vitesse de conduite automatique prédéfinie pour le véhicule se déplacer, et la vitesse de voie minimale étant une limitation de vitesse de voie minimale.

2. Procédé selon la revendication 1, dans lequel déterminer l'efficacité du trafic de voie sur la base du paramètre de coût de blocage de véhicule, du paramètre de coût de blocage d'obstacle, et du coefficient de pondération de blocage comprend les étapes consistant à :

déterminer l'efficacité du blocage de véhicule sur la base d'un produit du paramètre de coût de blocage de véhicule et d'un premier coefficient de pondération de blocage ;

calculer un premier produit du paramètre de coût bloqué et du premier coefficient de pondération de blocage et un premier produit du paramètre de coût d'auto-blocage et d'un deuxième coefficient de pondération de blocage, respectivement, et obtenir l'efficacité du blocage d'obstacle sur la base d'une somme des premiers produits ; et

déterminer l'efficacité du trafic de voie sur la base d'une somme de l'efficacité du blocage de véhicule et de l'efficacité du blocage d'obstacle.

3. Procédé selon la revendication 2, dans lequel déterminer l'efficacité du trafic de voie sur la base d'une somme de l'efficacité du blocage de véhicule et de l'efficacité du blocage d'obstacle comprend les étapes consistant à :

obtenir un premier poids de collision entre le véhicule se déplacer et le véhicule de tête de même voie et un second poids de collision entre le véhicule se déplacer et le véhicule de tête de voie différente ; et

calculer un second produit de l'efficacité du blocage de véhicule et du premier poids de collision et un second produit de l'efficacité du blocage d'obstacle et du second poids de collision, respectivement, et déterminer l'efficacité du trafic de voie sur la base d'une somme des seconds produits.

4. Procédé selon la revendication 1, dans lequel déterminer des véhicules d'obstacle dans des voies correspondant à un véhicule se déplacer comprend les étapes consistant à :

rechercher tous les véhicules d'obstacle de tête correspondant à une position de déplacement du véhicule se déplacer ; et

déterminer un véhicule de tête de même voie et un véhicule de tête de voie différente sur la base des positions de voie des véhicules d'obstacle de tête.

5. Procédé selon l'une quelconque des revendications 1 à 4, dans lequel, après avoir déterminé l'efficacité du trafic de voie sur la base du paramètre de coût de blocage de véhicule, du paramètre de coût de blocage d'obstacle, et du coefficient de pondération de blocage, le procédé comprend en outre les étapes consistant à :

obtenir des informations d'état de déplacement du véhicule se déplacer à condition que le temps de collision du véhicule dans une voie cible sélectionnée sur la base de l'efficacité du trafic de voie corresponde au temps de collision de référence ; et

déclencher une opération de planification de changement de voie du véhicule à condition que les informations d'état de déplacement ne correspondent pas à une stratégie de suppression de changement de voie de la voie cible.

**6.** Procédé selon la revendication 5, comprenant en outre les étapes consistant à :

démarrer une minuterie de refroidissement pour un changement de voie à condition que le temps de collision du véhicule dans la voie cible ne corresponde pas au temps de collision de référence ou à condition que les informations d'état de déplacement correspondent à la stratégie de suppression de changement de voie de la voie cible ; et
exécuter à nouveau les étapes consistant à déterminer des véhicules d'obstacle dans des voies correspondant au véhicule se déplacer à condition que la minuterie de refroidissement atteigne un intervalle de temps de refroidissement prédéfini.

**7.** Dispositif informatique, comprenant au moins un processeur, dans lequel le processeur est couplé à une mémoire, un programme ou une instruction à exécuter sur le processeur est stocké(e) dans la mémoire, et lorsque le programme ou l'instruction est exécuté(e) par le processeur, les étapes du procédé de détermination de l'efficacité du trafic d'un véhicule selon l'une quelconque des revendications 1 à 6 sont mises en œuvre.

**8.** Moyen de stockage lisible par ordinateur, stockant un programme ou une instruction, dans lequel, lorsque le programme ou l'instruction est exécuté(e) par le processeur, les étapes du procédé de détermination de l'efficacité du trafic d'un véhicule selon l'une quelconque des revendications 1 à 6 sont mises en œuvre.

Determine obstacle vehicles in lanes corresponding
to a traveling vehicle — 101

Determine a vehicle block cost parameter based on a first
velocity of the traveling vehicle and a second velocity of a
same-lane leading vehicle, and obtain an obstacle block cost
parameter of a different-lane leading vehicle — 102

Determine lane traffic efficiency based on the vehicle block
cost parameter, the obstacle block cost parameter, and
a block weight coefficient — 103

FIG. 1

Determine vehicle block efficiency based on a product of the vehicle block cost parameter and a first block weight coefficient — 201

Calculate a first product of the blocked cost parameter and the first block weight coefficient and a first product of the self-block cost parameter and a second block weight coefficient respectively, and obtain obstacle block efficiency based on a sum of the first products — 202

Determine lane traffic efficiency based on a sum of the vehicle block efficiency and the obstacle block efficiency — 203

FIG. 2

Leading obstacle 2

Leading obstacle 1

Leading obstacle 3

Target vehicle

To-be-changed lane 1
(Left lane)

To-be-changed lane 2
(Right lane)

FIG. 3

Obtain traveling state information of the traveling vehicle under a condition that vehicle collision time in a target lane selected based on the lane traffic efficiency matches reference collision time ⟋ 301

Trigger a vehicle lane changing planning operation under a condition that the traveling state information does not match a lane change suppression strategy of the target lane ⟋ 302

FIG. 4

Determination device for
vehicle traffic efficiency

First determination
module ⟍ 41

Obtaining module ⟍ 42

Second
determination
module ⟍ 43

FIG. 5

FIG. 6

**EP 4 446 189 B1**

**Patent documents cited in the description**

- US 2020310428 A1
- CN 113844451 A

- CN 114506342 A